# EUROPEAN PATENT APPLICATION

(11) **EP 4 663 514 A1**
(43) Date of publication of application: **17.12.2025**
(21) Application number: 24182069.5
(22) Date of filing: 13.06.2024
(51) Int. Cl.: B62D 5/09, B62D 1/22

(54) **HYDRAULIC STEERING SYSTEM FOR STEERING A VEHICLE WITH A STEERING MECHANICS**

(71) Applicant: Danfoss Power Solutions ApS, 6430 Nordborg (DK)
(72) Inventor: Rudolph, Tom, 6430 Nordborg (DK); Draxe, Kaustubh, 6430 Nordborg (DK)
(74) Representative: Keil & Schaafhausen Patentanwälte PartGmbB

(57) **Abstract**

The present invention relates to a hydraulic steering system (100) for steering a vehicle with a steering mechanics (112). The hydraulic steering system (100) comprises a hydraulic steering unit (101). A single hydraulic steering unit (101) comprises two outlet ports (111) configured to allow hydraulic fluid to be discharged from the hydraulic steering unit (101) to the steering mechanics (112) of the vehicle, at least two redundant hydraulic components (108, 109) configured to change a hydraulic flow of the hydraulic fluid and to be fluidically connected to the outlet ports (111), a first steering control device (102) for controlling a first hydraulic component (108) of the at least two hydraulic components (108, 109) and configured to change the hydraulic flow in the hydraulic steering unit (101) and a second hydraulic component (109) configured to change the hydraulic flow in the hydraulic steering unit (101). In order to provide an improved hydraulic steering system, the single hydraulic steering unit (101) further comprises a second steering control device (105) for controlling the second hydraulic component (109) of the at least two hydraulic components (108, 109).

## Description

The present invention relates to a hydraulic steering system for steering a vehicle with steering mechanics.

Various types of hydraulic steering systems are known in the art in order to steer a steering mechanics, i.e. to apply load to the steering mechanics. The steering of the steering mechanics may result in a change of an angle of wheels of the vehicle with respect to a steering axis, thereby changing a direction of movement of the vehicle.

The steering of the vehicle may be done directly, for example manually by a driver of the vehicle operating a steering wheel and/or a joystick or another steering input device, wherein a steering input from the driver is responsible for a steering movement of the vehicle. Alternatively or additionally, the steering may be done remotely, for example autonomously, i.e. fully automatic, by a remote control system or manually by a user giving commands to the remote control system.

An exemplary hydraulic steering system 1 allowing direct steering is for example shown in Figure 1 known from DE 10 2007 053 024 A1, which is also described with some modifications in EP 2 762 387 A1. For those reference signs shown in Figure 1 and which are not described below, reference is made to the corresponding patent document of the prior art.

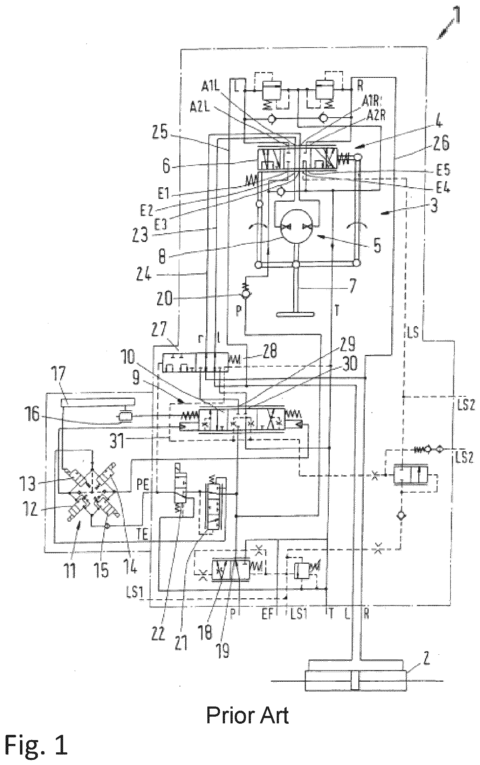

The steering system 1 of Figure 1 comprises a steering motor 2, which may be a steering mechanics, that can be actuated by hydraulic pressure, i.e. via connections L and R. The hydraulic steering system 1 comprises a hydraulic steering unit 3 and a steering valve 9, both of which are configured to control supply of hydraulic pressure via connections L and R to the steering motor 2. For example, hydraulic bridge circuit 11, i.e. valves 12 to 15, may actuate a steering valve slide 10 of the steering valve 9, for example the steering valve slide 10 may be moved. In addition, the steering valve 9 may be operated by a control electronic 17. Alternatively, the hydraulic steering unit 3 may directly be actuated via a steering hand wheel 7 allowing the pressure supply to the steering motor 2 to be controlled.

Accordingly, hydraulic steering systems are known which comprise both a conventional, ordinary steering arrangement, for example with a steering handwheel, and a parallel electrically actuated valve, so that it may be possible to steer a vehicle both directly, for example, manually with the conventional steering arrangement, and remotely, for example with the electrically actuated valve allowing for autonomous steering. One disadvantage of this layout, however, is having to provide at least two valve units in order to implement the various steering functions (direct and remote steering), wherein still no back-up function is provided when it comes for example to autonomous steering. In other words, when the electrically actuated valve fails, there is no other electrically actuated backup valve.

In this regard, in order to meet the increased safety requirements, especially for remote-controlled, autonomous steering of vehicles, it is known to use a two-channel configuration among others to provide a back-up function. In other words, a steering signal is sent to a valve control unit via two separate channels. Thus, the two-channel configuration allows, for example, a remote steering signal to be received as two separate messages, wherein the messages are cross-checked to detect discrepancies between the messages and thus avoid faulty steering. For example, a steering signal may be cross-checked before it is used to control the electrically actuated valve described above.

Further, the two-channel configuration allows that if one of the two channels fails, the other channel is still available so that the steering of the vehicle may still be controllable. Although this configuration offers the advantage that one valve may be controlled via different channels, this does not provide a remedy if, for example a motor for controlling the electrically actuated valve fails as both channels still try to control the same motor.

Therefore, it is an object of the present invention to provide an improved hydraulic steering system which is able to eliminate the aforementioned disadvantages. In addition, the present invention is intended to provide a hydraulic steering system that is as small and cost-effective as possible.

This object is solved by a hydraulic steering system according to claim 1.

The hydraulic steering system may be used for steering a vehicle with a steering mechanics. The vehicle may for example be a construction vehicle, an agriculture vehicle, a mining vehicle or alike. Preferably, the vehicle is a vehicle for off-road use. However, still the hydraulic steering system could also be used in on-road vehicles such as trucks or buses.

The steering mechanics of the vehicle may be provided by at least one hydraulic cylinder configured to be moved by providing pressurized hydraulic fluid. Consequently, the steering mechanics of the vehicle may be provided by two hydraulic cylinders. In this regard, two hydraulic cylinders may especially be used for on-road applications, for example in on-road vehicles. The at least one hydraulic cylinder may be a double-acting cylinder. More precisely, the at least one hydraulic cylinder may be a symmetric cylinder which may comprise a piston rod on opposite sides. The steering mechanics may be directly coupled to wheels of the vehicle, so that movement of the at least one hydraulic cylinder, and thus the piston rods may move the wheels of the vehicle. Therefore, the steering mechanics of the hydraulic steering system allow for steering a vehicle. However, the steering mechanics could also have an asymmetrical cylinder instead.

Further, the hydraulic steering system comprises a hydraulic steering unit, wherein a single hydraulic steering unit comprises the following features. In other words, the features described in the following are features of exactly one single hydraulic steering unit. Thus, although a hydraulic steering system could comprise more than one hydraulic steering unit, the following features would refer to a single one of these hydraulic steering units.

Therefore, the single hydraulic steering unit comprises (exactly) two outlet ports configured to allow hydraulic fluid to be discharged from the hydraulic steering unit to the steering mechanics of the vehicle. The two outlet ports may therefore be configured to be coupled to respective fluid lines in order to connect the steering mechanics to the hydraulic steering unit. For example, there may be two outlet ports of the hydraulic steering unit fluidically connected to the steering mechanics and each of the outlet ports may become a high-pressure outlet port depending on the desired steering movement of the steering mechanics, i.e. depending on a fluid flow controlled inside the hydraulic steering unit.

Further, the hydraulic steering unit comprises at least two redundant hydraulic components. The at least two hydraulic components are arranged as part of the hydraulic steering unit. In other words, a single hydraulic steering unit comprises at least two redundant hydraulic components. In this regard, the term "redundant" may indicate or may be understood to mean that the at least two hydraulic components fulfill the same purpose or function substantially equally well and are therefore each configured to take over in the event the other hydraulic component may fail. In other words, the at least two hydraulic components are each configured to provide full steering functionality. In addition, the at least two hydraulic components may be configured to provide at least substantially the same flow rate to the outlet ports and thus to the steering mechanics. Preferably, the flow rate of the hydraulic components is identical. In one aspect, a difference in flow rate is less than 10 %, preferably 0 %. This means that the flow rate provided by either one of the at least two hydraulic components would be sufficient for full steering functionality. For example, the at least two hydraulic components may be housed inside the same housing of the single hydraulic steering unit. Further, the first hydraulic component and the second hydraulic component may be integrated within a single hydraulic steering unit. In other words, the first hydraulic component, the second hydraulic component, the first steering control device, the second steering control device and the two outlet ports may all be embodied within said one (single) hydraulic steering unit. For example, the at least two hydraulic components may be housed inside the same housing of the single hydraulic steering unit. Each hydraulic component is configured to be fluidically connected to the two outlet ports. Thus, if the outlet ports are coupled to the steering mechanics, the at least two hydraulic components may also be fluidically connected to the steering mechanics. Consequently, each hydraulic component may for example also be fluidically connected to the steering mechanics by fluid lines.

The at least two hydraulic components are further configured to change a hydraulic flow of the hydraulic fluid. Each of the hydraulic components may for example be configured to increase, decrease or stop the hydraulic flow of the hydraulic fluid inside the hydraulic steering unit. In other words, the hydraulic components may allow hydraulic pressure to the steering mechanics to be controlled. In this regard, a first hydraulic component may thus be configured to change the hydraulic fluid flow in the hydraulic steering unit, i.e., from and/or to the outlet ports and thus to the steering mechanics if the steering mechanics are fluidically connected to the outlet ports, and a second hydraulic component may be configured to change the hydraulic fluid flow in the hydraulic steering unit, i.e., a hydraulic flow from and/or to the outlet ports and thus to the steering mechanics if the steering mechanics are fluidically connected to the outlet ports. In this regard, pressurized hydraulic fluid may for example be provided to the hydraulic steering unit by an external pressure source, e.g. a system pump, wherein the at least two hydraulic components may change and control the hydraulic fluid flow to the outlet ports.

As such, the single hydraulic steering unit comprises steering control devices for controlling the at least two hydraulic components. A first steering control device is thus provided for controlling the first hydraulic component of the hydraulic steering unit, i.e. a first one of the at least two hydraulic components of the hydraulic steering unit. The first steering control device can therefore control the first hydraulic component and thereby change the hydraulic flow in the hydraulic steering unit and to the outlet ports. Controlling the first hydraulic component may thus result in an increase, decrease or stop of fluid flow through the first hydraulic component. The resulting change in hydraulic fluid flow may thus cause steering mechanics fluidically connected to the outlet ports of the single hydraulic steering unit to be moved. More precisely, a cylinder of the steering mechanics may be moved due to hydraulic pressure applied to the steering mechanics. Consequently, a control operation of the first steering control device may also be understood as a steering operation, i.e. a hydraulic fluid flow operation, of the first hydraulic component. In other words, the first steering control device is configured to control the first hydraulic component in such a way that it changes the hydraulic fluid flow to the outlet ports and possibly to the steering mechanics, for example by increasing, decreasing, or stopping the hydraulic fluid flow from and/or to the outlet ports. In this regard, the hydraulic component may for example open or close (different) fluid paths or fluid lines of the hydraulic steering unit.

The hydraulic steering unit also comprises a second hydraulic component also configured to change the hydraulic flow in the hydraulic steering unit. Further, the single hydraulic steering unit comprises a second steering control device. The second steering control device is used for controlling the second hydraulic component of the (same) single hydraulic steering unit. The aforementioned description of and the features described with respect to the first steering control device also apply to the second steering control device. Further, the aforementioned description of and the features described with respect to the first hydraulic component also apply to the second hydraulic component. Therefore, also the second steering control device is used to control the corresponding second hydraulic component. In other words, the second hydraulic component may also be configured to change the hydraulic fluid flow from and/or to the outlet ports dependent on the second steering control device and the corresponding second hydraulic component.

In one aspect, the control devices, i.e. the first steering control device and the second steering control device may be configured to operate independently. In other words, if one control device fails, the other control device may still be fully functional and not be affected. In this regard, the control devices may further be arranged separately, for example in separate housings.

In addition, when at least one hydraulic component of the at least two hydraulic components is actuated, i.e. controlled, this may result in actuation of the other hydraulic component. For example, a first control operation of the first hydraulic component, which may cause a hydraulic fluid flow passing through the first hydraulic component to increase, may result in a second control operation of the second hydraulic component, which may cause the hydraulic fluid flow for example to decrease, and vice versa. This may at least be true for a fully functional hydraulic steering system. Further, "controlling" a steering control device may also mean that the hydraulic fluid flow through a respective hydraulic component is not changed. In other words, if for example a hydraulic fluid flow through the first hydraulic component is changed, for example increased, this may result in no change in hydraulic fluid flow through the second hydraulic component.

Together, the hydraulic components and the corresponding steering control devices as well as the (exactly) two outlet ports may thus form a single hydraulic steering unit, for example an electrohydraulic steering component. In one aspect, this electrohydraulic steering component, i.e. the single hydraulic steering unit, may for example be based on the concept of an OSPE-unit or an EHi-unit from Danfoss. According to the invention and contrary to the known OSPE- and EHi-units from Danfoss, however, at least two hydraulic components of this electrohydraulic steering component are provided with corresponding steering control devices. In other words, unlike conventional OSPE-units or EHi-units, according to the disclosure, these units have two (electrically) controllable hydraulic components. Thus, according to the disclosure, at least two hydraulic components of a (single) hydraulic steering unit are configured to be electrically controlled.

Both steering control devices may be controlled by respective control signals, steering signals or control commands. As such the steering control devices are thus electrically controllable and may comprise respective electronic elements such as a processor unit, a storage unit, an internal or external power supply, a signal receiving unit, a signal transmitting unit and the like. Since the exact layout of the steering control devices and their electronic elements is not part of this disclosure, a more detailed description is not provided. Still, it should be noted that the first steering control device and the second steering control device are configured to operate the corresponding hydraulic components.

Due to the inventive concept, wherein the first hydraulic component and the second hydraulic component are both arranged as part of a single hydraulic steering unit, and wherein both hydraulic components are controllable, this allows for example that if electronic inside one of the hydraulic components or steering control devices has a fault, so that without the invention it would no longer be possible to control, for example remotely control, the hydraulic component and thus the hydraulic steering unit, the other steering control device together with the other hydraulic component may take over. In other words, the other (for example second) steering control device may be operated instead of the first steering control device. Consequently, a degree of redundancy is already provided by only one (single) hydraulic steering unit.

In addition, providing redundancy with just one hydraulic steering unit means that the hydraulic steering system for a vehicle can be made smaller. This may also save costs.

Further, the inventive concept may allow that, for example, when the first steering control device is unable to control the first hydraulic component, a corresponding signal may be received by the second steering control device in order to take over control of the hydraulic steering unit. In this regard the first steering control device may pass on a (steering) signal to the second steering control device. However, it is also possible for a control signal (e.g. a control command) to be sent simultaneously to both steering control devices in order to shorten reaction times or to control the respective hydraulic components together.

The provision of two electrically controllable hydraulic components in one hydraulic steering unit thus enables a variety of control alternatives, which, in addition to a backup control, in which one steering control device takes over control in the event of failure of another steering control device or failure of a corresponding hydraulic component, can also include a supporting control, in which both steering control devices control the corresponding hydraulic components simultaneously.

In one embodiment, each steering control device may be provided by a control unit and an actuator unit. The first steering control device may thus comprise a first control unit and a first actuator unit and the second steering control device may thus comprise a second control unit and a second actuator unit. Consequently, a single hydraulic unit may comprise at least two hydraulic components, each operable by a corresponding actuator unit, and wherein each actuator unit is controlled by a corresponding control unit. For a hydraulic steering unit comprising two hydraulic components, there may thus also be two actuator units and two control units, one for each hydraulic component respectively. The control unit may therefore be configured to receive, process, forward, send, store etc. (steering) signals and control the corresponding actuator unit if required. The actuator units may be provided by an electric motor. In one aspect, at least one of the actuator units may be provided by an electric motor. The actuator unit may for example operate the hydraulic component based on the (steering) signal. Providing an actuator unit and a control unit for each corresponding hydraulic component of a single hydraulic steering unit enables the hydraulic steering unit to be controlled even in the event of problems with control of one of the hydraulic components and/or with one of the steering control devices.

In a further embodiment, at least one of the hydraulic components is provided by a valve unit. Preferably, both hydraulic components, i.e. the first hydraulic component and the second hydraulic component, are provided by a valve unit. A hydraulic component may thus for example be provided by a valve unit which may be a rotary valve or a slide valve. For example, the steering control devices may thus change a valve position of the respective hydraulic component of the hydraulic steering unit. Hence, a valve slide of the corresponding hydraulic component or a passage of the rotary valve may be moved in order to change the hydraulic fluid flow. Each hydraulic component may be provided by a different type of valve. Depending on the type of hydraulic component, the type of actuation of the hydraulic component may vary. For example, a rotary valve may be operated by rotational movement, wherein a valve slide may be operated by translational movement. However, instead of a valve unit, the hydraulic component could also be a controllable orifice. Still, the use of valve units makes it particularly easy to control the hydraulic steering unit.

In one embodiment, the first steering control device and the second steering control device are configured to be operated independently of each other by at least one steering input device. Hence, the first steering control device and the second steering control device may be configured to operate the corresponding hydraulic components independently from each other. Still, only one steering input device may be required in order to control the first and second steering control devices. Thus, the first hydraulic component and the second hydraulic component may be controlled by the corresponding first and second steering control devices which may receive a corresponding control signal from at least one steering input device. However, there may for example also be more than one steering input device, for example, two steering input devices, and each of the steering input devices may be configured to operate each of the corresponding steering control devices. In this regard, the steering control devices may each receive a (steering or control) signal, e.g. a control command, from one of the steering input devices and may then independently of each other control the assigned hydraulic component based on this signal. The steering input device may be any type of device that allows a steering signal to be sent to the corresponding steering control device of the respective hydraulic component, and wherein the corresponding steering control device is configured to perform a steering operation, thereby changing the hydraulic fluid flow to the outlet ports based on this signal, if necessary, i.e., if a change in hydraulic flow is required. If one of the steering control devices or hydraulic components has a fault, the independent control by one and the same steering input device allows the hydraulic steering unit and thus the hydraulic steering system to remain functional (at least to a limited extent) even if one of the hydraulic components or steering control devices fails. This is particularly helpful for a fully automatic, remote control of a vehicle.

According to one embodiment, the first steering control device and the second steering control device may be configured to be directly or remotely operated by the same at least one steering input device. According to one embodiment, the steering control devices may also be configured to be directly, manually or remotely, automatically operated by the same at least one steering input device. Therefore, for example, one, i.e., the same, steering input device may directly operate the first steering control device and the second steering control device.

Additionally or alternatively, for example, one other (further) steering input device may remotely operate the first steering control device and the second steering control device. A steering control device may therefore, for example, receive a signal, such as an external, remote signal from a monitoring and/or control unit and/or an internal, direct signal from a driver, causing the first steering control device to perform a steering operation, i.e. a hydraulic fluid flow operation. This steering operation may then be used to affect a corresponding hydraulic component. In other words, the steering control device is configured to control the corresponding, assigned hydraulic component in such a way that it changes the hydraulic fluid flow to the steering mechanics, for example by increasing, decreasing, or stopping the hydraulic fluid flow from and/or to the steering mechanics, and wherein the steering control device receives the corresponding control signal directly and/or remotely from the same at least one steering input device. In this regard, the hydraulic component may for example open or close (different) fluid paths based on a control operation of the steering control device which receives a corresponding control signal, steering signal or control command by one steering input device. For example, the steering control device may change a valve position of the hydraulic component of the hydraulic steering unit.

The terms "control signal", "steering signal" and "control command" may be used interchangeably.

In the event that the hydraulic steering unit is installed or implemented in a vehicle, the term "remotely" may be understood to refer to control from a location outside the vehicle. In other words, a "remote" control may refer to control from outside the vehicle, wherein a control executing organ, e.g. a user or a computing unit, is not moving as a function of the vehicle or the hydraulic steering unit installed in the vehicle. Since the hydraulic unit does not necessarily have to be installed in a vehicle, "remotely" may also be understood as controlling the steering control devices wirelessly by at least one steering input device. In this regard, each steering input device may be configured to control each of the steering control devices by transmitting a control signal to the respective steering control device. This means, for example, that a control signal, which is sent from a steering input device operated by a user or a computing unit, may be received by the first and second steering control device, and wherein the steering control devices control the corresponding hydraulic components depending on the received control signal. Consequently, allowing to operate the first steering control device and the second steering control device by the same steering input device, provides a certain degree of redundancy by only a single hydraulic steering unit.

Further and in contrast to "remotely" operating a steering control device, "directly" operating a steering control device may mean that a steering input device transmits a control signal to a steering control device which may be located on a vehicle steered by the corresponding control signal, for example. Independent of a vehicle, "directly" may also mean that a control signal operating the hydraulic components and thereby influencing the hydraulic fluid flow to the steering mechanics is transmitted by cable to the steering control device, for example.

Accordingly, in one embodiment, the first steering control device and the second steering control device may be configured to be directly operated by a steer-by-wire-system. The term "steer-by-wire" refers to a system in which a steering signal or control signal from a sensor (in particular a sensor provided as part of a steering input device, for example a steering wheel or a joystick or the like) is transmitted exclusively electrically via one or more control units to the steering control devices that execute the control signal. Data used for steering-by-wire may be transmitted electrically wired or wirelessly. However, in a steer-by-wire-system, there is no mechanical connection between, for example a steering wheel and steered wheels of a vehicle. Using a steer-by-wire system with the aforementioned configuration of a hydraulic steering unit therefore allows a functional unit comprising a hydraulic component and the associated steering control device to function as a backup, for example, if another functional unit fails. In addition, it may be possible to shorten the reaction time of the hydraulic steering system if, for example, due to a control signal, one of the steering control devices is actuated which, for example, has to perform a smaller movement of the valve slide of the corresponding hydraulic component in order to achieve a similar change in the hydraulic flow to the steering mechanism as the other steering control device would achieve, for example, by moving the other valve slide of the other corresponding hydraulic component.

Additionally, or alternatively, the first steering control device and the second steering control device may be configured to be remotely operated by data received from a satellite navigation system. Consequently, data from a satellite navigation system, for example, GPS-data from a GPS-unit, may be used by a steering input device to remotely operate the steering control devices in order to actuate the hydraulic components and thereby for example steer a vehicle. The steering input device may, for example, have a control unit that evaluates the satellite navigation data and provides a corresponding control signal. For example, the control unit may compare the data with a target value that corresponds, for example, to a targeted path of the vehicle. In the event of a deviation between the target value and the satellite navigation data, i.e. by a deviation from the targeted path, or an anticipated change in direction along the targeted path, the steering input device may send a corresponding control signal to at least one of the steering control devices in order to control the corresponding hydraulic component and thereby steer the vehicle. As the control signal may be received by both steering control devices, this allows for redundancy if one of the devices fails. However, the control signal may also only be passed on, for example, from the first steering control device to the second steering control device in the event of failure of the first hydraulic component, for example. This allows a vehicle to be steered fully automatic.

In one embodiment, the hydraulic steering system may comprise two steering input devices. One of the steering input devices may allow for remote operation of the steering control devices and the other steering input device may allow for direct operation of the steering control devices. Therefore, in other words, a first steering input device may be configured for direct operation of the first steering control device. Further, a second steering input device may be configured for remote operation of the first steering control device and the second steering control device. The option of being able to control the steering control devices both remotely and directly by two different steering input devices provides the advantages offered by each mode of operation in isolation. In addition, it allows the driver to intervene directly, for example manually, if the remote control is faulty or vice versa. In this regard, one mode of operation may be used as a priority mode, wherein the other mode is only operating the steering control devices if it recognizes certain inconsistencies, deviations etc. with the priority steering mode.

In a further embodiment, the first steering input device may be provided by a steer-by-wire-system and the second steering input device may be provided by a control unit configured to provide control commands to the second steering control device. The control commands may, for example, be based on data received from a satellite navigation system. Consequently, the hydraulic steering system may be operated directly as well as remotely depending on the specific type of input. In addition, the first steering input device may control the first hydraulic component and the second hydraulic component of the hydraulic steering unit, and the second steering input device may control the first hydraulic component and the second hydraulic component of the hydraulic steering unit.

Due to the inventive concept, wherein the first hydraulic component and the second hydraulic component may both be integrated into but at least arranged as part of a (single) hydraulic steering unit, it is only required to send control signals, for example of a steer-by-wire-system or a control unit using satellite navigation data, to one hydraulic steering unit and still providing the possibility of controlling two hydraulic components. This means in more general terms that the hydraulic fluid flow of the hydraulic steering system may be influenced in two ways by two separate hydraulic components, however, only requiring one hydraulic steering unit, for example one modified OSPE-unit.

In a further aspect, the hydraulic steering system may (additionally) comprise a manually operable steering arrangement. A manually operable steering arrangement may, for example, be provided by a steering wheel, a joystick or the like. In other words, a manually operable steering arrangement may be an arrangement which is operated by physical input from the driver. The manually operable steering arrangement may be mechanically coupled to the first hydraulic component. Thus, for example, rotating the steering wheel may operate the first hydraulic component mechanically. Hence, the manually operable steering arrangement may be configured to directly operate the first hydraulic steering unit. Thus, even if for example electronics fail, this may provide one option to still be able to steer the vehicle. Further, at least one of the steering control devices, in particular its actuator unit, which may together with the manually operable steering arrangement used for controlling at least one of the hydraulic components, may support the driver in operating, for example, a corresponding hydraulic component and thus may provide more convenient manual steering.

In one embodiment, the first steering control device may be configured to provide force feedback to the manually operable steering arrangement. In this regard, the first steering control device, for example its actuator unit, may for example be coupled to the mechanically coupling used for mechanically coupling the manually operable steering arrangement to the first hydraulic component. For example, the manually operable steering arrangement may be mechanically coupled to the first hydraulic component by a steering column, wherein the first steering control device is also configured to operate this same steering column. The first steering control device may thus allow for a force-feedback to the driver. For example, even if the vehicle may for example be remotely steered by means of the second steering control device, the first steering control may provide force feedback to the driver. This force feedback may improve the driver's comfort.

According to one aspect, if there is a drop in hydraulic pressure, for example, if the hydraulic steering system loses oil pressure due to problems with a hydraulic pressure supply, and steering in an emergency mode is required, wherein the manually operable steering arrangement is used for emergency steering, the actuator unit of the first steering control device may assist emergency steering. In other words, the actuator unit, which may for example be an electric motor, may be configured to apply a torque to the steering column and may assist manual emergency steering. However, for the actuator unit to be configured to assist the manual steering, the actuator unit, for example the electric motor, has to be supplied with electric power. Thus, the aforementioned steering assistance is only possible if a failure in the hydraulic pressure supply does not affect the power supply for the actuator unit.

According to a further embodiment, the first steering control device and/or the second steering control device may comprise a respective first and/or second sensor arrangement. In other words, the first steering control device and/or the second steering control device may comprise a sensor arrangement. The first and/or second sensor arrangement may comprise a torque sensor and/or a position sensor. As such the sensor arrangements may for example be configured to detect a condition, for example, an angle of rotation, a force or a speed of rotation, of the actuator unit, for example the electric motor, of the corresponding steering control device. Sensor data detected by the sensor arrangement may for example be transmitted to a control unit configured to remotely control the vehicle. In this regard, the sensor data may thus be used to confirm that a control signal has been successfully transmitted to a corresponding steering control device, for example the first steering control device, and that the steering control device has successfully controlled the corresponding hydraulic component, for example the first hydraulic component. The sensor arrangement may thus allow for a feedback loop.

In one aspect, the sensor arrangements may each comprise at least two torque sensor and/or at least two position sensors. In other words, there may be redundant sensors allowing to compare respective sensor data. Further, all sensors or sensor arrangements used in the hydraulic steering system may be provided redundant so that sensor data between two redundant sensors or sensor arrangements may be compared, and wherein respective control signals may be provided based on the comparison. In one aspect, each component or unit of the hydraulic steering system could be equipped with a sensor. In this regard, for example, sensor data from a wheel angle sensor detecting a steering wheel angle may be compared with sensor data from the hydraulic steering cylinder and/or from the hydraulic components. Consequently, if for example the vehicle is supposed to drive straight and the wheel angle sensor detects corresponding sensor data of the vehicle driving straight, the wheel angle sensor data could be compared to the sensor data from the hydraulic steering cylinder and/or the hydraulic component, and wherein if the sensor data of the wheel angle sensor and the hydraulic steering cylinder and/or hydraulic component comprises a mismatch, for example when the sensor data of the hydraulic component would show a change of state of the hydraulic component which would lead to a change in wheel angle, the first and/or second actuator unit may be deactivated so that a change of state of the respective component is stopped. This may thus prevent an unwanted or even harmful steering if no steering is wanted or required.

In a further embodiment, the first steering control device may be configured to receive sensor data of the second sensor arrangement of the second steering control device and/or the second steering control device may be configured to receive sensor data of the first sensor arrangement of the first steering control device. Thus, when for example a steering signal is transmitted to the first steering control device, the corresponding first sensor arrangement may detect a steering operation, for example, rotation of the actuator unit, of the first steering control device. This sensor data of the first sensor arrangement may then be transmitted and received by the second steering control device either directly or indirectly, for example via a control unit for remote control of a vehicle. The second steering control device may thus use this sensor data from the first sensor arrangement in order to either control the second hydraulic component or not. Hence, the first steering control device and/or the second steering control device may be configured to control fluid flow to the steering mechanics at least based on the sensor data. In this way, a self-regulating hydraulic steering system may be implemented that can detect when a functional unit (steering control unit together with a corresponding hydraulic component) is not working properly.

In a further embodiment, the steering mechanics may comprise a wheel angle sensor and/or a vehicle speed sensor. The vehicle speed sensor may be configured to provide information on the speed of the vehicle. The wheel angle sensor may be configured to provide information on an angle of at least one steering wheel relatively to a normal position, e.g. a position of the wheels when the vehicle is driving straight. The first steering control device and/or the second steering control device may be configured to use the sensor data (provided by the vehicle speed sensor and/or the wheel angle sensor) when controlling the corresponding hydraulic component. While the aforementioned sensor arrangements enable the previously described monitoring of the steering control devices to a certain extent, the sensors of the steering mechanics enable monitoring of the actual result of the steering performed by means of the hydraulic components. In particular, the actual execution of a steering signal may be monitored using the sensor data from the sensors of the steering mechanics and, in particular, external environmental influences can therefore be taken into account in the overall steering process. For example, a steering signal that imposes a certain steering angle of the vehicle's wheels may be transmitted to a steering control device, wherein the steering control device controls the corresponding hydraulic component, although the actual resulting steering angle of the wheels could be different depending on the surface to be driven on. This may be due to the fact that the force required to steer the wheels is different than initially assumed, for example due to muddy ground instead of dry asphalt. The sensors of the steering mechanics may thus enable a further feedback loop and allow safe and reliable steering.

In one embodiment, only one hydraulic component may be controlled at a time. For example, either the first steering control device may control the first hydraulic component, which may for example be a valve unit, or the second steering control device may control the second hydraulic component, which may for example be a valve unit. Controlling only one steering control device at a time may simplify control. At the same time, it is possible, for example, to coordinate the two steering control devices using the sensor data described above, so that a reliable hydraulic steering system is provided. Further, controlling only one steering control device at a time may increase the probability that the other steering control device is functional when it receives a control signal.

Furthermore, the second steering control device together with the second hydraulic component may be provided as a backup-unit for the first steering control device and the first hydraulic component. Therefore, the second steering control device may only be used to control the second hydraulic component, when the first steering control device or the first hydraulic component has a failure. However, this may also mean that the hydraulic steering unit is fully functional, i.e. the steering mechanics are already fully controllable if only one hydraulic component is used. This type of backup functionality may be particularly required for fully automated and autonomous vehicle control systems.

Although the object is solved in the present case by a hydraulic steering system according to the aforementioned aspects, the object is of course also solved by a larger steering system comprising further components, elements and features which are allowed to interact with a single hydraulic steering unit. For example, the object may also be solved by a vehicle steering system, which, depending on the specific configuration may also comprise steering mechanics, wheels, steering input devices, a driver compartment and the like. In other words, the invention may also be extended to such a larger unit.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: shows an exemplary hydraulic steering system known from the prior art;
- Fig. 2A: shows a hydraulic circuit diagram of an example of a hydraulic steering system with one steering input device according to the invention;
- Fig. 2B: shows a conceptual arrangement of the hydraulic steering system according to Fig. 2A;
- Fig. 3A: shows a further hydraulic circuit diagram of a further example of a hydraulic steering system with two steering input devices according to the invention; and
- Fig. 3B: shows a conceptual arrangement of the hydraulic steering system according to Fig. 3A.

In Fig. 1 an exemplary hydraulic steering system 1 known from the prior art and already described above is shown. The hydraulic steering system 1 comprises a manually operated conventional steering arrangement (hydraulic steering arrangement 3 with directional valve slide 6), and a steering valve 9, which may be operated by a control electronic 17.

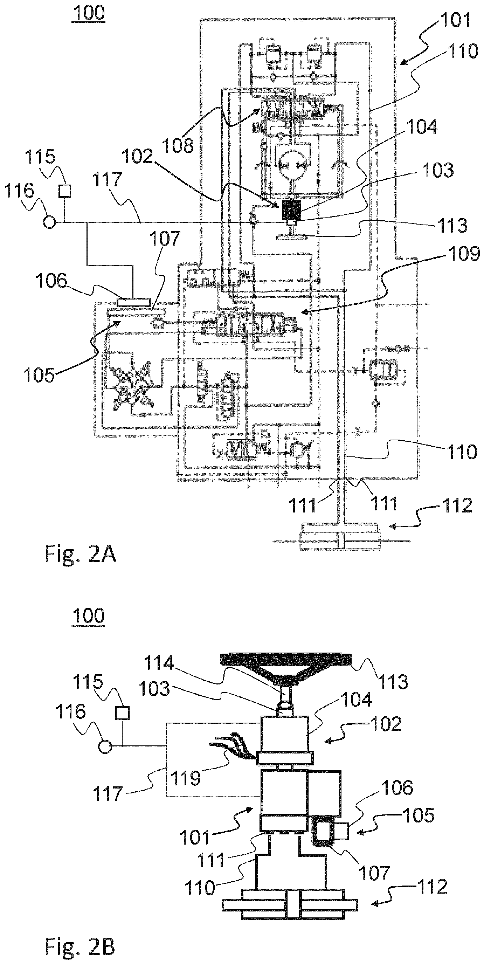

This hydraulic steering system 1 known from Fig. 1 was modified into a hydraulic steering system 100 according to the invention, as shown for example in Fig. 2A, in particular the hydraulic steering system 100 comprises a hydraulic steering unit 101 with a first steering control device 102 comprising a first control unit 103 and a first actuator unit 104 and with a second steering control device 105 comprising a second control unit 106 and a second actuator unit 107. The modification of the hydraulic steering system 1 shown is for illustrative purposes only, so that the invention is not considered to be limited to this modified hydraulic steering system 100.

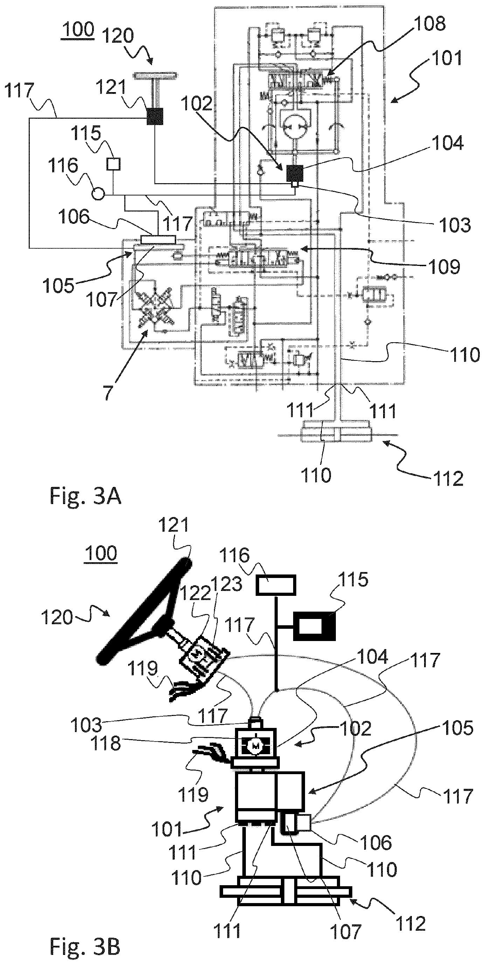

In Fig. 2A, 2B, 3A and 3B same elements, i.e. elements that perform a similar function or serve a similar purpose, may have the same reference numbers.

The single hydraulic steering unit 101 comprises two steering control devices 102, 105. Each steering control device 102, 105 is configured to control corresponding hydraulic components 108, 109. In this regard, the first steering control device 102 is configured to control a first hydraulic component 108 and the second steering control device 105 is configured to control a second hydraulic component 109. Here both hydraulic components 108, 109 are valve units. Depending on a state or condition of the hydraulic components 108, 109, a hydraulic fluid flow is controlled within the hydraulic steering unit 101, i.e. within fluid lines 110 of the hydraulic steering unit 101.

When the hydraulic steering system 100 is operated, hydraulic fluid may be discharged from outlet ports 111 of the hydraulic steering unit 101 and may be supplied to steering mechanics 112. A hydraulic cylinder of the steering mechanics 112 shown here is a double-acting, symmetrical cylinder. However, the steering mechanics could also have an asymmetrical cylinder instead. The steering mechanics 112 are configured to be connected to wheels (not shown) of a vehicle (not shown). For example, if a piston of the steering mechanics 112 as shown in the figure moves to the right (in relation to the figure), this could cause the vehicle to steer to the left and vice versa.

In general, steering of the vehicle and the respective operation of the first hydraulic component 108 may be done by a manually operable steering arrangement, for example by a steering wheel 113 as shown in Fig. 2A and 2B. Rotation of the steering wheel 113 may cause a valve slide of the first hydraulic component 108 to be moved, thereby changing connections of fluid lines 110 and thus the hydraulic flow at the two outlet ports 111.

The steering wheel 113 is mechanically coupled to the first hydraulic component 108 by a steering column 114 as shown in Fig. 2B. This steering column 114 allows to transfer force applied to the steering wheel 113 onto the first hydraulic component 108 The actuator unit 104 of the first steering control device 102 is also configured to apply a force onto said steering column 114. Therefore, it is not only possible to directly, manually operate the first hydraulic component 104 but also to remotely operate the first steering control device 102, thereby controlling the first hydraulic component 108.

In this regard, a first steering input device 115 is depicted which is configured to send a control or steering signal to the first control unit 103 of the first steering control device 102, thereby controlling the first hydraulic component 108. In other words, the control signal 115 transmitted to the first steering control device 102 may operate the first actuator unit 104 based on the control signal, wherein the operation of the first actuator unit 104 may then operate the corresponding first hydraulic component 108, i.e. here the valve unit.

However, instead of sending the steering signal to the first steering control device 102, thereby controlling the first hydraulic component 108, the steering signal may also be transmitted to the second steering control device 105, thereby controlling the second hydraulic component 109. This may for example be the case, when the first steering input device 115 does not receive a successful send and receive confirmation from the first steering input device 102, so that the first steering input device 115 must consider that the steering signal send to the first steering control device 102 has not been received.

The first steering input device 115 may be any type of device that allows a steering signal to be sent to the corresponding steering control devices 102, 105 of the respective hydraulic component 108, 109, and wherein the corresponding steering control device 102, 105 is configured to perform a steering operation, thereby changing the hydraulic fluid flow to the two outlet ports 111 based on this signal. The first steering input device 115 may thus for example be a computing or control unit which is configured to receive signals from a satellite navigation system 116, and wherein the computing unit determines a control signal as a function of this data.

The satellite navigation system 116 may for example allow to monitor the movement of the vehicle. For example, a user located in a control center and monitoring the vehicle may use the satellite navigation data to send the steering signal remotely to a corresponding steering control device 102, 105. Alternatively, however, this process can also be fully automated, for example.

In the figures, data links 117 between the first steering input device 115 and the first steering control device 102 and the second steering control device 105 for sending the respective control signals are depicted as lines. However, this may not necessarily mean that the control signals are only send by wired data links 117. The control signals may also be transmitted wirelessly.

As aforementioned, the first actuator unit 104 is connected to the steering column 114, so that not only does a remote control signal, for example, enable the first hydraulic component 108 to be actuated, but the first actuator unit 104 may also be used to provide force feedback to the driver sitting at the steering wheel 113. For example, the driver may receive a tactile information via the manually operable steering arrangement, e.g. the steering wheel 113, when for example a maximum steering angle and/or a neutral position is reached.

In this regard, it may also be mentioned that the corresponding first and second steering control devices 102, 105 may be equipped with sensor arrangements 118 (only exemplary shown in Fig. 3B), which may be configured to detect a condition, for example, an angle of rotation, a force or a speed of rotation, of the corresponding actuator units 104, 107. The sensor arrangements 118 may thus for example allow to detect whether the actuator unit 104, 107 is operated or not. Thus, the data link 117 between the first steering control device 103 and the second steering control device 106 may be used to actuate the second steering control device 106 by means of the first steering control device 103 when the sensor arrangement 118 of the first steering control device 102 detects that the first actuator unit 104 is not actuated. In other words, when there are problems in controlling the first hydraulic component 108, the second steering control device 105 may take over control of the hydraulic steering unit 101 or vice versa.

Depending on whether the sensor arrangement 118 is arranged in the first steering control device 102 or in the second steering control device 105, the sensor arrangement 118 may also be referred to as the first sensor arrangement 118 (of the first steering control device 102) or the second sensor arrangement 118 (of the second steering control device 105).

Similarly, corresponding sensors (not shown) may be provided as part of the steering mechanics 112. For example, a wheel angle sensor or vehicle speed sensor, may allow a feedback loop and as such may be used for the corresponding control of the steering control devices 102, 105. For example, a wheel angle sensor may report the actual steering angle of the wheels to the first steering input device 115, which then sends a control signal adapted to the actual steering angle to the corresponding steering control device 102, 105.

Finally, it should be noted that the actuator units 104, 107 are preferably electric motors or electric motor units which is indicated schematically by electrical power cables 119.

In contrast to the hydraulic steering units 101 shown in Figs. 2A and 2B, which can be actuated via a first steering input device 115 or, for example, via a manually operable steering arrangement, a steer-by-wire system is shown in Figs. 3A and 3B as an additional second steering input device 120, which enables the steering control devices 102, 105 to be actuated instead of the manually operable steering arrangement, i.e. instead of the steering wheel 113.

The second steering input device 120 is configured to send control signals via respective data links 117 to the first steering control device 102 as well as to the second steering control device 105. In this regard, the second steering input device 120 is operable in addition to the first steering input device 115. In other words, it is possible to send control signals to the corresponding steering control devices 102, 105 either by the fist steering input device 115 or the second steering input device 120.

Thus, the first steering input 115 device may allow to control the steering control devices 102, 105 remotely, for example based on the satellite navigation data as described above. And the second steering input device 120 may allow to directly operate the steering input devices 102, 105 by rotating a steering wheel 121 of the steer-by-wire-system, i.e. of the second steering input device 120.

The steer-by-wire-system comprises a steering input device motor 122 and a steering input device sensor 123. Electrical power is provided to the second steering input device 120 by power cables 119. The second steering input device 120 is in data connection with the corresponding steering control devise 102, 105, particular with their first and second control units 103, 106. The steering input device sensors 123 could be torque and/or position sensors.

While steering the vehicle, an operator or a driver may provide a steering input via the steering wheel 121 of the second steering input device 120, which could also be a joystick or the like. The steering input device sensors 123 may then detect a movement of the steering wheel 121 and provide respective information of the movement to the corresponding steering control device 102, 105. Based on the information provided by the steering input device sensors 123, the steering control devices 102, 105 are configured to control the corresponding hydraulic components 108, 109. Depending on how the sensor data of the steering input device sensors 123 is transmitted, where the second steering input device 120 is located etc. the hydraulic steering unit 101 may either be operated remotely or directly.

Alternatively, when the hydraulic unit 101 is operated by the first steering input device 115, for example by a GPS-unit and a corresponding computing unit, for example, to remotely steering the vehicle, the second steering input device 120 may allow force-feedback to the operator. In other words, steering wheel 122 may rotate based on signals send from the hydraulic steering unit 101 to the second steering input device 120, wherein the steering input device motor 122 may rotate the steering wheel 122. Thus, although the driver may not actively steer the vehicle, the operator may feel more comfortable.

In addition or alternatively, the operator may interrupt steering of the vehicle based on first steering input device 115, for example, when the operator feels that the vehicle is not driving in the correct direction, by operating the second steering input device.

In summary and depending on the configuration of the hydraulic steering system 100, operation of the hydraulic steering unit 101 may be either done by means of the first steering input device 115, the second steering input device 120 or the manually operable steering arrangement. The first hydraulic component 108 or the second hydraulic component 109 are controlled depending on the corresponding control signal, wherein the control signal is used to operate the first steering control device 102 or the second steering control device 105, or depending on a steering movement of the mechanically connected manually operable steering arrangement.

Providing the hydraulic steering unit 101 with two hydraulic components 108, 109, which are valve units here, enables the hydraulic components 108, 109 to be actuated even in the event that one of the steering control devices 102, 105 or the associated hydraulic component 108, 109 has a fault and is therefore not working properly. In addition, the described concept allows to provide for a feedback-loop, may decrease reaction times of the hydraulic steering unit 101 and allows for a less complex hydraulic steering system 100 allowing for redundancy. The inventive concept therefore allows to meet the increased safety requirements, which are especially required for remote-controlled, autonomous steering of vehicles.

Further, since only one single hydraulic steering unit 101 is required to allow for redundancy, the overall size of the hydraulic steering system 100 may be decreased and costs may be saved.

### List of reference signs

- 1: hydraulic steering system
- 2: steering motor
- 3: hydraulic steering unit
- 6: directional valve slide
- 7: steering hand wheel
- 9: steering valve
- 10: steering valve slide
- 11: hydraulic bridge circuit
- 12 to 15: valves
- 17: control electronic
- L, R: connections

- 100: hydraulic steering system
- 101: hydraulic steering unit
- 102: first steering control device
- 103: first control unit
- 104: first actuator unit
- 105: second steering control device
- 106: second control unit
- 107: second actuator unit
- 108: first hydraulic component
- 109: second hydraulic component
- 110: fluid line
- 111: outlet port
- 112: steering mechanics
- 113: steering wheel
- 114: steering column
- 115: first steering input device
- 116: satellite navigation system
- 117: data link
- 118: sensor arrangement
- 119: power cable
- 120: second steering input device
- 121: steering wheel
- 122: steering input device motor
- 123: steering input device sensor

## Claims

1. A hydraulic steering system (100) for steering a vehicle with a steering mechanics (112), wherein the hydraulic steering system (100) comprises a hydraulic steering unit (101), and wherein a single hydraulic steering unit (101) comprises
two outlet ports (111) configured to allow hydraulic fluid to be discharged from the hydraulic steering unit (101) to the steering mechanics (112) of the vehicle,
at least two redundant hydraulic components (108, 109) configured to change a hydraulic flow of the hydraulic fluid and to be fluidically connected to the outlet ports (111),
a first steering control device (102) for controlling a first hydraulic component (108) of the at least two hydraulic components (108, 109) and configured to change the hydraulic flow in the hydraulic steering unit (101), and
a second hydraulic component (109) configured to change the hydraulic flow in the hydraulic steering unit (101),
**characterized in that** the single hydraulic steering unit (101) further comprises a second steering control device (105) for controlling the second hydraulic component (109) of the at least two hydraulic components (108, 109).

2. The hydraulic steering system (100) according to claim 1, **characterized in that** each steering control device (102, 105) is provided by a control unit (103, 106) and an actuator unit (104, 107).

3. The hydraulic steering system (100) according to claim 1 or 2, **characterized in that** at least one, preferably both, of the hydraulic components (108, 109) is provided by a valve unit.

4. The hydraulic steering system (100) according to any one of the preceding claims, wherein the first steering control device (102) and the second steering control device (105) are configured to be operated independently of each other by at least one steering input device (115, 120).

5. The hydraulic steering system (100) according to any one of the preceding claims, **characterized in that** the first steering control device (102) and the second steering control device (105) are configured to be directly and/or remotely operable by the same at least one steering input device (115, 120).

6. The hydraulic steering system (100) according to claim 5, **characterized in that** the first steering control device (102) and the second steering control device (105) are configured to be directly operable by a steer-by-wire-system, and/or wherein the first steering control device (102) and the second steering control device (105) are configured to be remotely operable by data received from a satellite navigation system (116).

7. The hydraulic steering system (100) according claim 5, **characterized in that** the hydraulic steering system (100) comprises two steering input devices (115, 120), wherein a first steering input device (115) is configured for direct operation of the first steering control device (102) and the second steering control device (105), and wherein a second steering input device (120) is configured for remote operation of the first steering control device (102) and the second steering control device (105).

8. The hydraulic steering system (100) according claim 7, **characterized in that** the first steering input device (115) is provided by a steer-by-wire-system, and wherein the second steering input device (120) is provided by a control unit configured to provide control commands to the second steering control device (105), for example based on data received from a satellite navigation system (116).

9. The hydraulic steering system (100) according any one of claims 1 to 5 or 7, **characterized in that** the hydraulic steering system (100) comprises a manually operable steering arrangement, for example a steering wheel (113), mechanically coupled to the first hydraulic component (108), and wherein the manually operable steering arrangement is configured to directly operate the first hydraulic component (108).

10. The hydraulic steering system (100) according to claim 9, **characterized in that** the first steering control device (102) is configured to provide force feedback to the manually operable steering arrangement.

11. The hydraulic steering system (100) according to any one of claims 2 to 10, **characterized in that** the first steering control device (102) and/or the second steering control device (105) comprises a respective first and/or second sensor arrangement (118) configured to detect a condition, for example, an angle of rotation, a force or a speed of rotation, of the actuator unit (104, 107) of the corresponding steering control device (102, 105).

12. The hydraulic steering system (100) according to claim 11, **characterized in that** the first steering control device (102) is configured to receive sensor data of the second sensor arrangement (118) of the second steering control device (105) and/or **in that** the second steering control device (105) is configured to receive sensor data of the first sensor arrangement (118) of the first steering control device (102), and wherein the first steering control device (102) and/or the second steering control device (105) are configured to control hydraulic flow to the steering mechanics (112) at least based on said sensor data.

13. The hydraulic steering system (100) according to any of the preceding claims, **characterized in that** the steering mechanics (112) comprises a wheel angle sensor and/or a vehicle speed sensor, and wherein the first steering control device (102) and/or the second steering control device (105) is configured to use said sensor data when controlling the corresponding hydraulic component (108, 109).

14. The hydraulic steering system (100) according to any one of the preceding claims, **characterized in that** only one hydraulic component (108, 109) is controlled at a time.

15. The hydraulic steering system (100) according to any one of the preceding claims, **characterized in that** the second steering control device (105) together with the second hydraulic component (109) is provided as a backup-unit for the first steering control device (102) and the first hydraulic component (108).
